# EUROPEAN PATENT SPECIFICATION

(11) **EP 3 568 796 B1**
(45) Date of publication and mention of the grant of the patent: **23.11.2022**
(21) Application number: 18739307.9
(22) Date of filing: 12.01.2018
(51) Int. Cl.: G06F 21/57, H04L 9/08, H04L 9/40, G06F 9/4401

(54) **BOOTLOADER LEVEL ENCRYPTION FOR SYSTEM BOOT DATA**
VERSCHLÜSSELUNG AUF BOOTLOADER-EBENE FÜR SYSTEMSTARTDATEN
CHIFFREMENT DE NIVEAU DE PROGRAMME D'AMORÇAGE POUR DONNÉES D'AMORÇAGE DE SYSTÈME

(30) Priority: 13.01.2017 US 201715406479
(43) Date of publication of application: 20.11.2019
(73) Proprietor: THALES DIS CPL USA, INC., Austin, TX 78759 (US)
(72) Inventor: RANGAYYAN, Vishnu, San Jose California 95134 (US)
(74) Representative: Grevin, Emmanuel
(86) International application number: PCT/US2018/013670
(87) International publication number: WO 2018/132773

(56) References cited:
- EP-A1- 3 098 745
- US-A1- 2012 151 199
- US-A1- 2012 210 115
- US-A1- 2013 117 551
- US-A1- 2015 121 497
- US-A1- 2015 178 504
- US-B1- 6 185 678
- US-B1- 6 189 100
- Anonymous: "Booting - Wikipedia", , 28 November 2016 (2016-11-28), XP055690318, Retrieved from the Internet: URL:https://en.wikipedia.org/w/index.php?t itle=Booting&oldid=751994168 [retrieved on 2020-04-29]
- JOHNSTON INTEL CORPORATION S VENAAS M ET AL: "Dynamic Host Configuration Protocol (DHCP) Options for the Intel Preboot eXecution Environment (PXE); rfc4578.txt", DYNAMIC HOST CONFIGURATION PROTOCOL (DHCP) OPTIONS FOR THE INTEL PREBOOT EXECUTION ENVIRONMENT (PXE)?; RFC4578.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 November 2006 (2006-11-01), XP015055013,

## Description

### BACKGROUND

Currently used Operating Systems have a boot mechanism that relies on a bootloader component that is executed by the hardware or platform firmware, usually called a BIOS (Basic Input Output System). This bootloader component fulfills an important transitional role between the hardware initialization phase after system power on to the OS software initialization during regular OS bootstrapping. The role of the bootloader is to load the OS kernel and required device drivers into memory and transfer execution to the OS kernel. It may optionally include reading configuration data and even presenting the user with a choice of Operating Systems to boot from.

The bootloader can be optionally downloaded from a network server and executed on the system by the system BIOS or firmware. The mechanism of downloading the bootloader from the network is standardized using the networking protocols Dynamic Host Configuration Protocol (DHCP), Pre-boot execution Environment (PXE) and Trivial File Transfer Protocol (TFTP). When the system is being booted using the PXE mechanism, the BIOS hands over control after system initialization to a PXE launcher that starts a DHCP client using a configured Network Interface Card (NIC). The DHCP client obtains an Internet Protocol (IP) address and other configuration data, and will also obtain PXE specific options by specifying that it is a "PXEclient". This mechanism uses the DHCP options fields to exchange data between the PXE client running on the system being booted and the DHCP server. It can optionally exchange data with a different PXE server that handles all DHCP queries from the client which are PXE specific, ie., tagged with "PXEclient".

Currently, encryption of a storage volume or data on the system requires a key that is provided by the user interactively or by storing the key in a clear/non-encrypted area on the volume or by a network based key management server. The latter approach requires secure network communication and is possible when the OS kernel is running and is able to provide advanced networking functionality. Since the OS kernel and its dependencies need to be loaded by the bootloader, they are generally not encrypted and kept in the clear when encrypting storage volumes used by the system. This causes a security risk where the OS kernel and dependent files loaded by the bootloader can be read or written to and tampered. Therefore, there is a need in the art for a solution which overcomes the drawbacks described above. US6189100B1 describes a method for ensuring the integrity of remote boot client data. US2012/0151199 A1 describes a secure encrypted boot with a simplified firmware update. The document "Booting" extracted from Wikipedia ® dated November 28, 2016 describes boot sequence on Personal Computer.
US6185678B1 describes a secure and reliable bootstrap architecture which uses the Diffie-Hellman key agreement.

### SUMMARY

In some embodiments, a method for encryption for system boot data, performed by a computing device is provided. The method includes performing, as part of a boot process of a computing device, a key exchange with a server, to obtain a key. The method includes decrypting, with the key, an encrypted portion of a boot volume, and continuing the boot process, using the decrypted portion of the boot volume.

In another embodiment, a server with a downloadable bootloader or bootloader driver module is provided. The server includes one or more processors, configured for downloading; and a memory having a downloadable bootloader or bootloader driver module. The bootloader or bootloader driver module has instructions that direct one or more processors of a computing device to which the bootloader or bootloader driver module is downloaded to perform a method. The method includes obtaining a key by key exchange with the server or a further server, during a boot process of the computing device and decrypting, with the key, an encrypted portion of a boot volume of the computing device, including an encrypted operating system kernel, during the boot process of the computing device. The method includes loading the decrypted portion of the boot volume, including the decrypted operating system kernel, into system memory of the computing device, during the boot process of the computing device.

Other aspects and advantages of the embodiments will become apparent from the following detailed description taken in conjunction with the accompanying drawings which illustrate, by way of example, the principles of the described embodiments.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art.
Fig. 1 depicts a boot process when booting from a hard disk drive in accordance with some embodiments.
Fig. 2 depicts a regular boot process when booting from a PXE boot enabled NIC.
Fig. 3 depicts an Encrypted Root volume and header on a Linux OS when booting from a HDD.
Fig. 4 depicts an Encrypted Boot volume and PXE Bootloader that does a DH key exchange to obtain a boot volume encryption key.
Fig. 5 depicts an Encrypted Boot volume and Bootloader driver module on a Boot volume that does a DH key exchange.
Fig. 6 is a flow diagram of a method for encryption for boot data, which can be performed on or by the computing device embodiment of Fig. 4.
Fig. 7 is a flow diagram of a further method for encryption for boot data, which can be performed on or by the computing device embodiment of Fig. 5.
Fig. 8 is an illustration showing an exemplary computing device which may implement the embodiments described herein.

### DETAILED DESCRIPTION

As a solution to the above-described problem(s), a mechanism to decrypt encrypted data on a boot volume or partition using a bootloader program or driver module downloaded from a remote network PXE server or loaded from the boot volume is herein described. The bootloader program or driver module can obtain the encryption key to decrypt the encrypted boot volume data using a Diffie Hellman (DH) key exchange with the remote network PXE server, thus allowing the system boot process of a computing device to continue.

The DHCP PXE options exchange can be reused for obtaining of the encryption key from the external key management server using Diffie Hellman key exchange. A bootloader can be downloaded from the PXE server that continues using the PXE client on the system being booted and sends further requests to the Key management server via the DHCP PXE options mechanism. In this manner, a computing device can do a key exchange over an insecure network using non-encrypted messages via the DHCP PXE options and this key exchange can provide the bootloader encryption driver with an encryption/decryption key to decrypt the boot storage volume, including the next level bootloader residing on the boot storage volume and the OS kernel and dependent files.

This key exchange allows encrypting the actual default OS bootloader installed on the system (i.e., a computing device), and the OS kernel and dependent files, without requiring the encryption key be provided interactively by the user or to store the key in the clear on the boot volume.

In cloud computing environments, there is a restriction on the networking activities that a Virtual Machine (VM) can perform, especially in the transmission of broadcast or multicast data. Broadcasting Ethernet frames is not allowed, and the only exception is the initial DHCP IP address request broadcast. Any Ethernet traffic that is not of the type Internet Protocol (IP), DHCP and ARP are blocked. Further, there is no provision for PXE boot of the VM using its system BIOS.

To overcome these limitations, one embodiment of the solution adopts the mechanism of integrating a bootloader driver module that is installed into the boot volume to assist the boot process in conjunction with the installed bootloader of the Operating System. This bootloader driver module will activate the NIC and obtain an IP address, and using an embedded Ethernet Media Access Control (MAC) address of the PXE server, the computing device can send unicast Ethernet frames and complete the key exchange described earlier. Thus the computing device is able to obtain a key and decrypt the rest of the boot volume data and continue the system boot process.

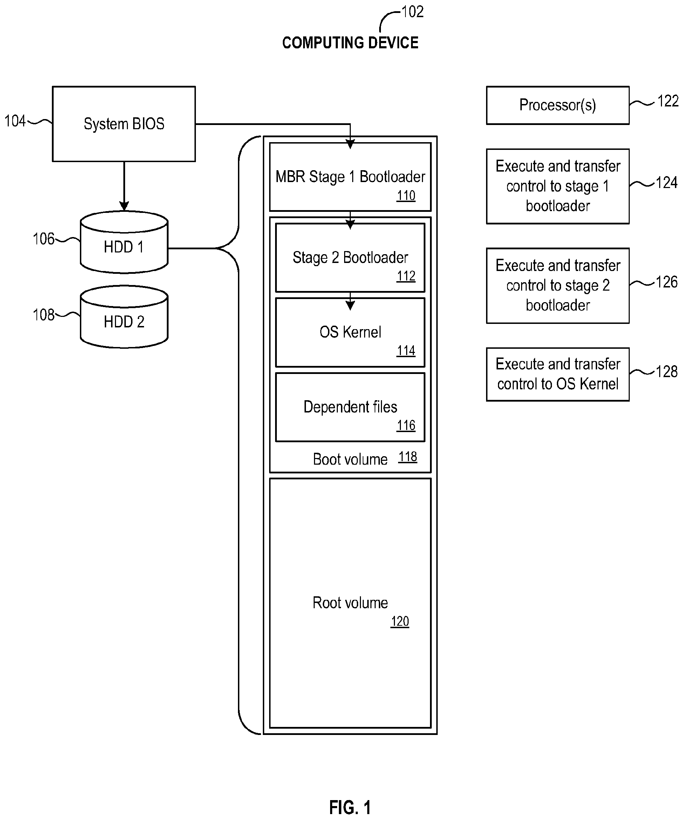

Fig. 1 describes the regular boot process when booting a computing device from local storage media such as a Hard Disk Drive (HDD) 106, 108 on x86 platforms. The boot process involves the system BIOS 104 selecting a boot device (HDD 106, in this example) and then executing the bootloader present in the Master Boot Record (MBR) on the first 512 Byte sector of the HDD 106. This is a first stage bootloader 110 that can transfer control to a larger and more capable second stage bootloader 112 residing at a fixed known offset on the HDD 106. The second stage bootloader 112 can optionally load additional drivers to access the filesystem, and read configuration data. The computing device may also be able to show a menu of options for the user to interact with. Once the selection of the OS to boot is made, either interactively or by default, the bootloader will load the selected OS kernel 114 and dependent files 116 into memory and execute the OS kernel 114 thus transferring control to the OS kernel 114.

In this example, the stage 2 bootloader 112, OS kernel 114 and operating system kernel-dependent files 116 are all unencrypted, in the boot volume 118 on the hard disk drive 106. A root volume 120 is also on the hard disk drive 106. One or more processors 122 of the computing device 102 perform the following actions in a boot process. In an action 124, the processor(s) 122 execute the system BIOS 104 and transfer control to the stage 1 bootloader 110. In an action 126, the processor(s) 122 execute and transfer control to the stage 2 bootloader 112. In an action 128, the processor(s) 122 execute and transfer control to the OS kernel 114.

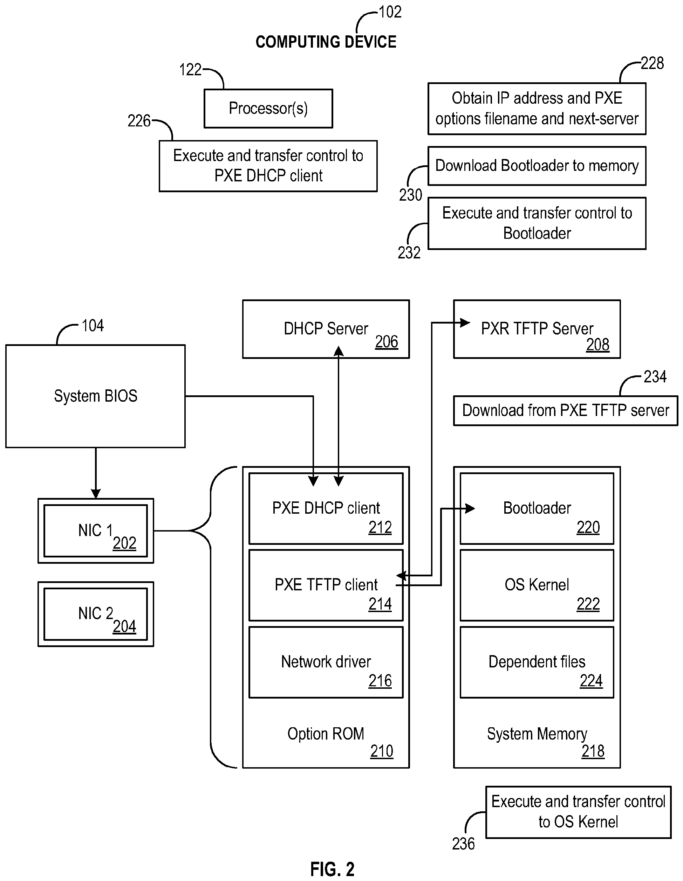

Fig. 2 describes the regular PXE network boot process when booting from a NIC 202 device on x86 platforms. The NIC 202 device provides a built-in Option Read Only Memory (ROM) 210 software that is used to activate the NIC 202 and communicate with network servers 206, 208. The NIC 202 also has a PXE DHCP client 212 which obtains a DHCP IP address and negotiates additional PXE options. The most commonly used options are A) the "filename" option, specified by the DHCP server 206 of the bootloader 220 file to download and B) the "next-server" option, indicating the server IP address to download the bootloader from. The PXE client (e.g., a PXE TFTP client 214) then contacts the server IP address obtained in B above via the TFTP protocol and downloads the bootloader 220 file specified in A above, e.g. from the PXE TFTP server 208. This bootloader 220 is then executed and control is transferred to the bootloader 220.

In this example, the PXE DHCP client 212, the PXE TFTP client 214 and a network driver 216 are in the option ROM 210. Two NICs 202, 204 are available for network communication. One or more processors 122 of the computing device 102 perform the following actions. In an action 226, the processor(s) 122 execute the system BIOS 104 and transfer control to the PXE DHCP client 212 in the option ROM 210. In an action 228, the processor(s) 122 obtain the IP address and the PXE options file name and the next-server. In an action 230, the processor(s) 102 download the bootloader 220 to system memory 218. In an action 232, the processor(s) 122 execute and transfer control to the bootloader 220. The bootloader 220 downloads the OS kernel 222 and dependent files 224 into system memory 218. In an action 236, the processor(s) 122 execute and transfer control to the OS kernel 222.

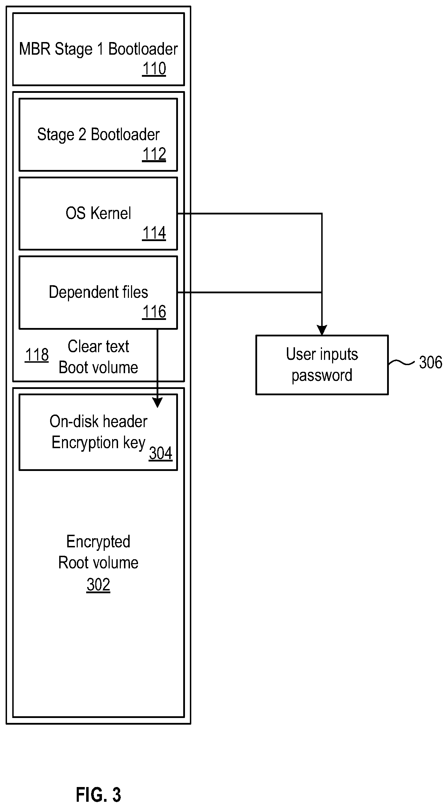

Fig. 3 describes the layout of a Linux OS installation on a HDD 106 and the parts of the hard disk drive that are encrypted using currently available mechanisms. There is a header 304 on the encrypted root volume 302 that stores the encryption key in encrypted format and requires the user to provide a password 306 to decrypt the encryption key. In this scenario, the data in the boot volume 118, including the stage 2 bootloader 112, the OS kernel 114 and dependent files 116 is in clear text, i.e., in decrypted form. The MBR stage 1 bootloader 110 is also in clear text, decrypted form.

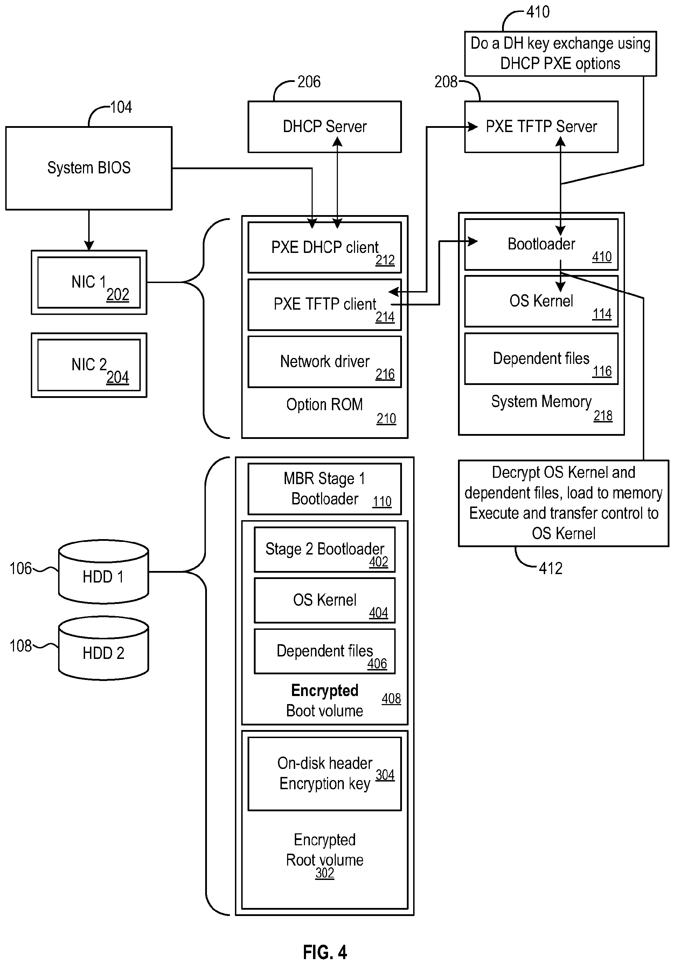

Fig. 4 describes how a computing device 102 can use a combination boot process of a PXE network boot and local HDD 106 boot. The PXE network boot process is used to download a bootloader 410 that is able to access the encrypted boot volume 408 and does a Diffie Hellman key exchange with the PXE network server 208 to obtain the encryption key for decrypting the encrypted boot volume 408. The bootloader 410 then decrypts the encrypted boot volume 408, including encrypted OS kernel 404 and encrypted dependent files 406, and loads the decrypted OS kernel 114 and decrypted dependent files 116 into system memory 218 or optionally executes and transfers control to the bootloader (e.g. MBR stage 1 bootloader 110 followed by stage 2 bootloader 402) installed on the boot volume by the OS.

In this version of the solution, the downloaded bootloader 410 directs the processor(s) 122 of the computing device 102 to perform the following actions. In an action 410, the processor(s) 122 do a DH key exchange using DHCP PXE options. In an action 412, the processor(s) 122 decrypt the encrypted boot volume 408, including the encrypted OS kernel 404 and encrypted dependent files 406, load the decrypted OS kernel 104 and decrypted dependent files 116 to system memory 218, then execute and transfer control to the decrypted OS kernel 114. In a variation, the processor(s) 122 decrypt the encrypted stage 2 bootloader 402 and transfer control to the decrypted stage 2 bootloader.

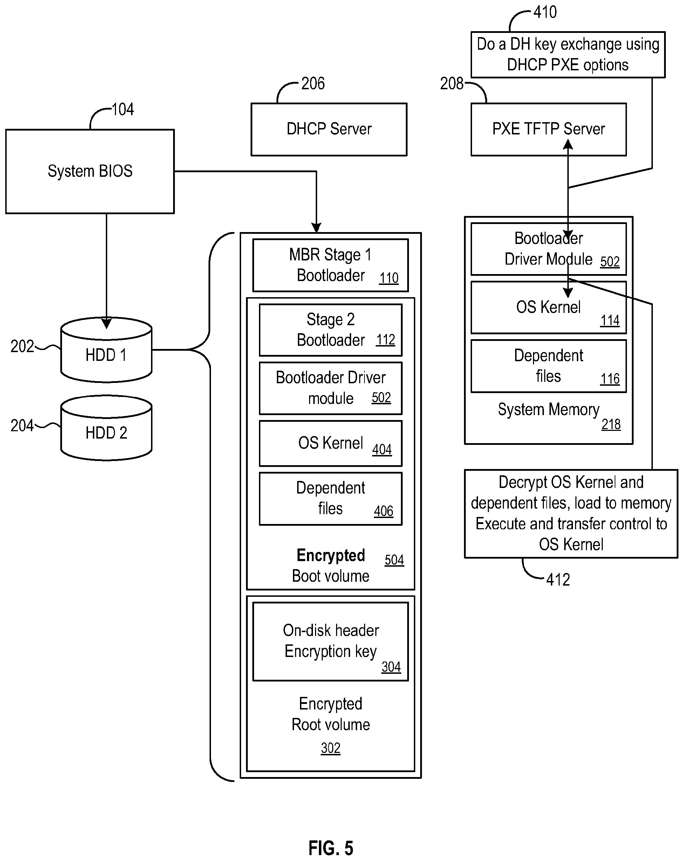

Fig. 5 describes the combination boot process of a bootloader driver module 502 installed in the encrypted boot volume 504 (i.e., at least portions of the boot volume are encrypted), where the bootloader (e.g., MBR stage 1 bootloader 110 and stage 2 bootloader 112) and the bootloader driver module 502 are not encrypted, but the rest of the boot volume data is encrypted. The system BIOS 104 executes the stage 1 bootloader 110 in the MBR, which transfers control to the stage 2 bootloader 112. This loads the new bootloader driver module 502 which can activate the NIC 202 device (see Fig. 2) and do the key exchange with the remote server (e.g., PXE TFTP server 208). Once the computing device 102 obtains the encryption key, the computing device 102 can decrypt the rest of the encrypted boot volume 504 contents, including decrypting the encrypted OS kernel 404 and encrypted dependent files 406, thus allowing the system boot process to continue.

In this version of the solution, the downloaded bootloader driver module 502 directs the processor(s) 122 of the computing device 102 to perform the following actions. In an action 410, the processor(s) 122 do a DH key exchange using DHCP PXE options. In an action 412, the processor(s) 122 decrypt the encrypted portions of the encrypted boot volume, including the encrypted OS kernel 404 and encrypted dependent files 406, load the decrypted OS kernel 104 and decrypted dependent files 116 to system memory 218, then execute and transfer control to the decrypted OS kernel 114.

The following are aspects of various embodiments for bootloader level encryption for system boot data.

The mechanism of doing a Diffie Hellman key exchange with a remote network server to obtain an encryption key using the DHCP PXE option negotiation communication mechanism.

A bootloader program downloaded from a network server by a PXE option ROM to do a Diffie Hellman key exchange as shown in Fig 4.

A bootloader program or driver module residing on the boot volume which can do the Diffie Hellman key exchange as shown in Fig. 5.

Storing the remote server NIC Ethernet MAC address in the bootloader program or driver module.

Using unicast Ethernet frames addressed only to the remote network server MAC address for the DHCP PXE option negotiation.

The decryption of encrypted boot volume or partition data including an OS kernel or OS bootloader program using the bootloader program or driver module.

The execution and transfer of control by the bootloader program or driver module to the decrypted OS kernel or program.

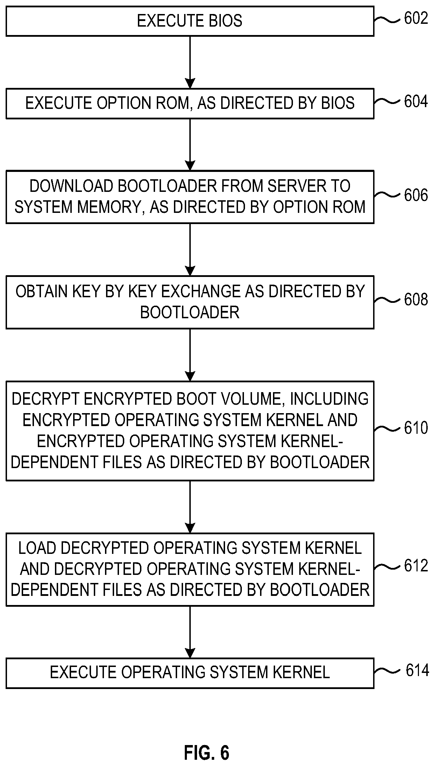

Fig. 6 is a flow diagram of a method for decryption of boot data, which can be performed on or by the computing device embodiment of Fig. 4. The method can be embodied in tangible, computer-readable media that has instructions for one or more processors. The method can be practiced by processors of a computing device and one or more servers participating in the key exchange and the downloading of the bootloader. Key exchange and bootloader downloading can be performed by the same server, or differing servers.

In an action 602, the processor(s) of the computing device execute the BIOS. Usually, this is a procedure followed at startup, as part of a boot up process, in response to power on, reset or reboot of the computing device. In an action 604, the processor(s) of the computing device execute the option ROM, as directed by the BIOS. In an action 606, the processor(s) of the computing device download a bootloader from a server to system memory of the computing device, as directed by the option ROM. In an action 608, the processor(s) of the computing device obtain a key by key exchange, as directed by the bootloader. The key exchange is performed with a server, which could be the same server or a different server from the server that downloaded the bootloader. User input is not required for the key exchange.

In an action 610, the processor(s) of the computing device decrypt the encrypted boot volume, as directed by the bootloader. The encrypted boot volume includes an encrypted operating system kernel and encrypted operating system kernel-dependent files. Decrypting produces a decrypted operating system kernel and decrypted operating system kernel-dependent files. In an action 612, the processor(s) of the computing device load the decrypted operating system kernel and decrypted operating system kernel-dependent files into system memory of the computing device, as directed by the bootloader. In an action 614, the processor(s) of the computing device execute the operating system kernel. Control is thus transferred from the boot up process to the operating system, which is decrypted and loaded during the boot up process.

In a variation, the encrypted boot volume includes an encrypted bootloader, and the decrypting produces a decrypted bootloader, operating system kernel and dependent files. Control is transferred from the downloaded bootloader to the decrypted bootloader, which directs loading of the decrypted operating system kernel.

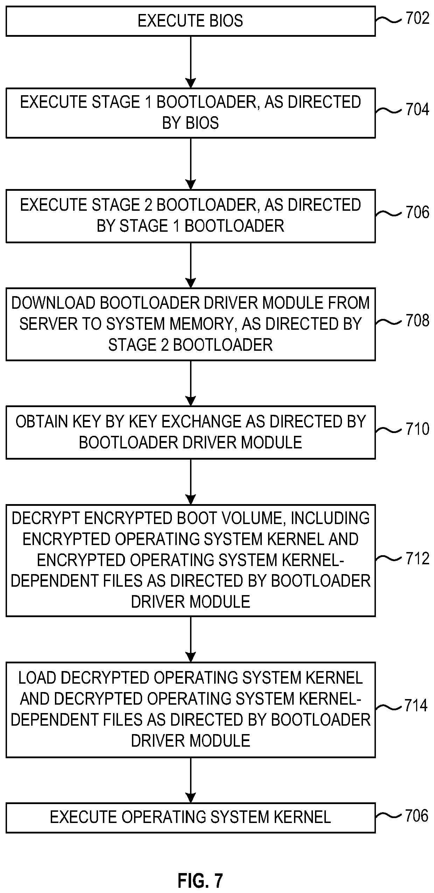

Fig. 7 is a flow diagram of a further method for decryption of boot data, which can be performed on or by the computing device embodiment of Fig. 5. Similar to the method depicted in Fig. 6, the method can be embodied in tangible, computer-readable media that has instructions for one or more processors. The method can be practiced by processors of a computing device and one or more servers participating in the key exchange and the downloading of the bootloader. Key exchange and bootloader downloading can be performed by the same server, or differing servers.

In an action 702, the processor(s) of the computing device execute the BIOS. Usually, this is a procedure followed at startup, as part of a boot up process, in response to power on, reset or reboot of the computing device. In an action 704, the processor(s) of the computing device execute a stage 1 bootloader, as directed by the BIOS. In an action 706, the processor(s) of the computing device execute a stage 2 bootloader, as directed by the stage 1 bootloader. In an action 708, the processor(s) of the computing device download a bootloader driver module from a server to system memory of the computing device, as directed by the stage 2 bootloader. In an action 710, the processor(s) of the computing device obtain a key by key exchange, as directed by the bootloader driver module. The key exchange is performed with a server, which could be the same server or a differing server from the server that downloaded the bootloader driver module. User input is not required for the key exchange.

In an action 712, the processor(s) of the computing device decrypt the encrypted boot volume, as directed by the bootloader driver module. The encrypted boot volume includes an encrypted operating system kernel and encrypted operating system kernel-dependent files. Decrypting produces a decrypted operating system kernel and decrypted operating system kernel-dependent files. In an action 714, the processor(s) of the computing device load the decrypted operating system kernel and decrypted operating system kernel-dependent files into system memory of the computing device, as directed by the bootloader driver module. In an action 716, the processor(s) of the computing device execute the operating system kernel. Control is thus transferred from the boot up process to the operating system, which is decrypted and loaded during the boot up process.

For both Fig. 6 and Fig. 7, the method can be embodied in tangible media that is accessed by a server, for purposes of downloading. The server has one or more processors that perform the downloading. For Fig. 6, the bootloader is downloadable from a server. For Fig. 7, the driver module is downloadable from a server. In some embodiments, the method can be embodied in tangible media with a portion of the tangible media present in, accessed by or accessible by a computing device, and a further portion of the tangible media present in, accessed by or accessible by a server.

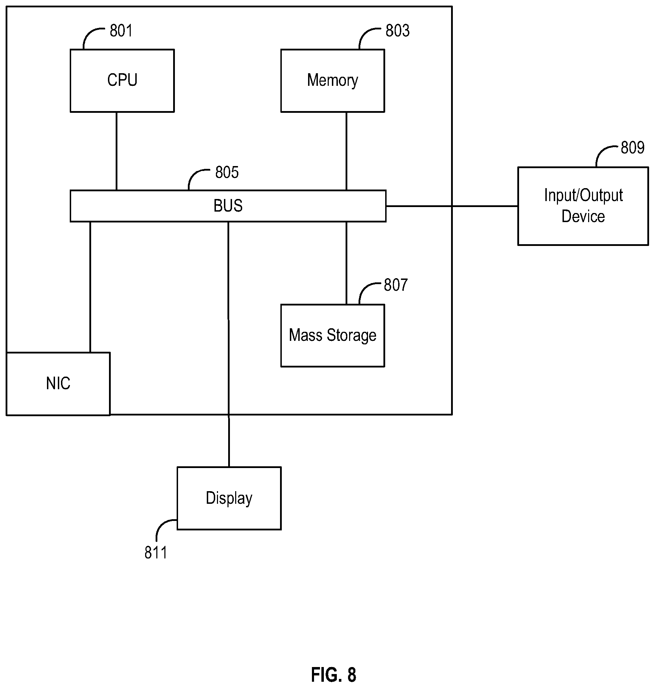

It should be appreciated that the methods described herein may be performed with a digital processing system, such as a conventional, general-purpose computer system. Special purpose computers, which are designed or programmed to perform only one function may be used in the alternative. Fig. 8 is an illustration showing an exemplary computing device which may implement the embodiments described herein. The computing device of Fig. 8 may be used to perform embodiments of the functionality for bootloader level encryption for system boot data in accordance with some embodiments. The computing device includes a central processing unit (CPU) 801, which is coupled through a bus 805 to a memory 803, network interface card (NIC), and mass storage device 807. Mass storage device 807 represents a persistent data storage device such as a disc drive, which may be local or remote in some embodiments. The mass storage device 807 could implement a backup storage, in some embodiments. Memory 803 may include read only memory, random access memory, etc. Applications resident on the computing device may be stored on or accessed via a computer readable medium such as memory 803 or mass storage device 807 in some embodiments. Applications may also be in the form of modulated electronic signals modulated accessed via a network modem or other network interface of the computing device. It should be appreciated that CPU 801 may be embodied in a general-purpose processor, a special purpose processor, or a specially programmed logic device in some embodiments.

Display 811 is in communication with CPU 801, memory 803, and mass storage device 807, through bus 805. Display 811 is configured to display any visualization tools or reports associated with the system described herein. Input/output device 809 is coupled to bus 805 in order to communicate information in command selections to CPU 801. It should be appreciated that data to and from external devices may be communicated through the input/output device 809. CPU 801 can be defined to execute the functionality described herein to enable the functionality described with reference to Figs. 1-7. The code embodying this functionality may be stored within memory 803 or mass storage device 807 for execution by a processor such as CPU 801 in some embodiments. The operating system on the computing device may be MS-WINDOWS^{™}, UNIX^{™}, LINUX^{™}, iOS^{™}, CentOS^{™}, Android^{™}, Redhat Linux^{™}, z/OS^{™}, or other known operating systems. It should be appreciated that the embodiments described herein may also be integrated with a virtualized computing system implemented with physical computing resources.

Detailed illustrative embodiments are disclosed herein. However, specific functional details disclosed herein are merely representative for purposes of describing embodiments. Embodiments may, however, be embodied in many alternate forms and should not be construed as limited to only the embodiments set forth herein.

It should be understood that although the terms first, second, etc. may be used herein to describe various steps or calculations, these steps or calculations should not be limited by these terms. These terms are only used to distinguish one step or calculation from another. For example, a first calculation could be termed a second calculation, and, similarly, a second step could be termed a first step, without departing from the scope of this disclosure. As used herein, the term "and/or" and the "/" symbol includes any and all combinations of one or more of the associated listed items.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

With the above embodiments in mind, it should be understood that the embodiments might employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing. Any of the operations described herein that form part of the embodiments are useful machine operations. The embodiments also relate to a device or an apparatus for performing these operations. The apparatus can be specially constructed for the required purpose, or the apparatus can be a general-purpose computer selectively activated or configured by a computer program stored in the computer. In particular, various general-purpose machines can be used with computer programs written in accordance with the teachings herein, or it may be more convenient to construct a more specialized apparatus to perform the required operations.

A module, an application, a layer, an agent or other method-operable entity could be implemented as hardware, firmware, or a processor executing software, or combinations thereof. It should be appreciated that, where a software-based embodiment is disclosed herein, the software can be embodied in a physical machine such as a controller. For example, a controller could include a first module and a second module. A controller could be configured to perform various actions, e.g., of a method, an application, a layer or an agent.

The embodiments can also be embodied as computer readable code on a tangible non-transitory computer readable medium. The computer readable medium is any data storage device that can store data, which can be thereafter read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer system so that the computer readable code is stored and executed in a distributed fashion. Embodiments described herein may be practiced with various computer system configurations including hand-held devices, tablets, microprocessor systems, microprocessor-based or programmable consumer electronics, minicomputers, mainframe computers and the like. The embodiments can also be practiced in distributed computing environments where tasks are performed by remote processing devices that are linked through a wire-based or wireless network.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

In various embodiments, one or more portions of the methods and mechanisms described herein may form part of a cloud-computing environment. In such embodiments, resources may be provided over the Internet as services according to one or more various models. Such models may include Infrastructure as a Service (IaaS), Platform as a Service (PaaS), and Software as a Service (SaaS). In IaaS, computer infrastructure is delivered as a service. In such a case, the computing equipment is generally owned and operated by the service provider. In the PaaS model, software tools and underlying equipment used by developers to develop software solutions may be provided as a service and hosted by the service provider. SaaS typically includes a service provider licensing software as a service on demand. The service provider may host the software, or may deploy the software to a customer for a given period of time. Numerous combinations of the above models are possible and are contemplated.

Various units, circuits, or other components may be described or claimed as "configured to" perform a task or tasks. In such contexts, the phrase "configured to" is used to connote structure by indicating that the units/circuits/components include structure (e.g., circuitry) that performs the task or tasks during operation. As such, the unit/circuit/component can be said to be configured to perform the task even when the specified unit/circuit/component is not currently operational (e.g., is not on). The units/circuits/components used with the "configured to" language include hardware--for example, circuits, memory storing program instructions executable to implement the operation, etc. Reciting that a unit/circuit/component is "configured to" perform one or more tasks is expressly intended not to invoke 35 U.S.C. 112, sixth paragraph, for that unit/circuit/component. Additionally, "configured to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks.

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the invention is not to be limited to the details given herein, but may be modified within the scope and equivalents of the appended claims.

## Claims

1. A method for decryption of system boot data including an encrypted operating system kernel, performed by a computing device, comprising:
as directed by a Basic Input Output System, BIOS (104), executing and transferring control to an entity which is either a bootloader (410) or a bootloader driver module (502) into the computing device,
performing, by the entity, as part of a boot process of the computing device, a key exchange with a server (208), to obtain a key;
decrypting by the entity, said encrypted operating system kernel (404) with the key, to generate a decrypted operating system kernel;
executing and transferring control to said decrypted operating system kernel,
**characterized in that** said key exchange is a Diffie Hellman key exchange performed using Dynamic Host Configuration Protocol, DHCP, Pre-boot execution Environment, PXE, option negotiation.

2. The method of claim 1, wherein said entity is the bootloader driver module (502) which activates a network interface card (202) of the computing device for communicating with the server, wherein said server has a Media Access Control address and wherein DHCP PXE option negotiation is performed using unicast Ethernet frames addressed only to said Media Access Control address.

3. The method of claim 1, wherein said entity is the bootloader and wherein the performing the key exchange comprises executing option read-only memory software to activate a network interface card (202) of the computing device and communicate with the server, during the boot process of the computing device.

4. A tangible, non-transitory, computer-readable media having instructions thereupon which, when executed by a processor, cause the processor to perform a method comprising:
as directed by BIOS (104), executing and transferring control to an entity which is either a bootloader (410) or a bootloader driver module (502) into a computing device,
obtaining, by the entity, a key through a key exchange with a server (208), as part of a boot process of a computing device;
using, by the entity, the key to decrypt an encrypted operating system kernel (404) stored included in a boot volume to generate a decrypted operating system kernel, and
executing and transferring control to said decrypted operating system kernel,
**characterized in that** said key exchange is a Diffie Hellman key exchange performed using DHCP PXE option negotiation.

5. The computer-readable media of claim 4, wherein said entity is the bootloader driver module (502) which is configured to activate a network interface card (202) of the computing device for communicating with the server, wherein said server has a Media Access Control address and wherein DHCP PXE option negotiation is performed using unicast Ethernet frames addressed only to said Media Access Control address.

## Patentansprüche

1. Verfahren zum Entschlüsseln von Systembootdaten, einschließlich eines verschlüsselten Betriebssystemkerns, das von einer Rechenvorrichtung durchgeführt wird, umfassend:
wie von einem grundlegendem Ein-Ausgabesystem, BIOS (104), angewiesen, Ausführen und Übertragen einer Steuerung an eine Entität, die entweder ein Boot-Loader (410) oder ein Boot-Loader-Treibermodul (502) ist, in die Rechenvorrichtung,
Durchführen, durch die Entität, als Teil eines Boot-Prozesses der Rechenvorrichtung, eines Schlüsselaustauschs mit einem Server (208), um einen Schlüssel zu erhalten;
Entschlüsseln durch die Entität des verschlüsselten Betriebssystemkerns (404) mit dem Schlüssel, um einen entschlüsselten Betriebssystemkern zu erzeugen;
Ausführen und Übertragen von Steuerung an den entschlüsselten Betriebssystemkern, **dadurch gekennzeichnet, dass** der Schlüsselaustausch ein Diffie-Hellman-Schlüsselaustausch ist, der unter Verwendung von Dynamic Host Configuration Protocol-, Pre-boot Execution Environment-Optionsverhandlung, DHCP PXE-Optionsverhandlung, implementiert wird.

2. Verfahren nach Anspruch 1, wobei die Entität das Boot-Loader-Treibermodul (502) ist, das eine Netzwerkschnittstellenkarte (202) der Rechenvorrichtung zum Kommunizieren mit dem Server aktiviert, wobei der Server eine Medienzugriffssteueradresse aufweist und wobei die DHCP PXE-Optionsverhandlung unter Verwendung von Unicast-Ethernet-Rahmen durchgeführt wird, die nur an die Medienzugriffssteueradresse adressiert sind.

3. Verfahren nach Anspruch 1, wobei die Entität der Boot-Loader ist und wobei das Durchführen des Schlüsselaustausches das Ausführen von Options-Nur-Lese-Speichersoftware umfasst, um eine Netzwerkschnittstellenkarte (202) der Rechenvorrichtung zu aktivieren und mit dem Server während des Boot-Prozesses der Rechenvorrichtung zu kommunizieren.

4. Greifbares, nichtflüchtiges, computerlesbares Medium mit Anweisungen darauf, die, wenn sie von einem Prozessor ausgeführt werden, den Prozessor veranlassen, ein Verfahren durchzuführen, umfassend:
wie von einem BIOS (104) angewiesen, Ausführen und Übertragen einer Steuerung an eine Entität, die entweder ein Boot-Loader (410) oder ein Boot-Loader-Treibermodul (502) ist, in eine Rechenvorrichtung,
Erhalten, durch die Entität, eines Schlüssels durch einen Schlüsselaustausch mit einem Server (208) als Teil eines Boot-Prozesses einer Rechenvorrichtung;
Verwenden, durch die Entität, des Schlüssels, um einen verschlüsselten Betriebssystemkern (404) zu entschlüsseln, der in einem Boot-Volumen eingeschlossen ist, um einen entschlüsselten Betriebssystemkern zu erzeugen; und
Ausführen und Übertragen von Steuerung an den entschlüsselten Betriebssystemkern,
**dadurch gekennzeichnet, dass** der Schlüsselaustausch ein Diffie-Hellman-Schlüsselaustausch ist, der unter Verwendung von DHCP PXE-Optionsverhandlung durchgeführt wird.

5. Computerlesbares Medium nach Anspruch 4, wobei die Entität das Boot-Loader-Treibermodul (502) ist, das dazu konfiguriert ist, eine Netzwerkschnittstellenkarte (202) der Rechenvorrichtung zum Kommunizieren mit dem Server zu aktivieren, wobei der Server eine Medienzugriffssteueradresse aufweist und wobei die DHCP PXE-Optionsverhandlung unter Verwendung von Unicast-Ethernet-Rahmen durchgeführt wird, die nur an die Medienzugriffssteueradresse adressiert sind.

## Revendications

1. Procédé de déchiffrement de données d'amorçage de système comprenant un noyau de système d'exploitation chiffré, exécuté par un dispositif informatique, comprenant :
selon les instructions d'un système de base d'entrée/sortie, BIOS (104), l'exécution et le transfert de commande à une entité qui est soit un programme d'amorçage (410) soit un module de pilote de programme d'amorçage (502) dans le dispositif informatique,
la réalisation, par l'entité, dans le cadre d'un processus d'amorçage du dispositif informatique, d'un échange de clés avec un serveur (208), pour obtenir une clé ;
le déchiffrement, par l'entité, dudit noyau de système d'exploitation chiffré (404) avec la clé, pour générer un noyau de système d'exploitation déchiffré ;
l'exécution et le transfert d'une commande audit noyau de système d'exploitation déchiffré, **caractérisé en ce que** ledit échange de clés est un échange de clés Diffie Hellman réalisé en utilisant une négociation d'option d'environnement PXE de protocole de configuration dynamique des hôtes, DHCP.

2. Procédé selon la revendication 1, dans lequel ladite entité est le module de pilote de programme d'amorçage (502) qui active une carte d'interface réseau (202) du dispositif informatique pour communiquer avec le serveur, dans lequel ledit serveur a une adresse de commande d'accès au support et dans lequel une négociation d'option PXE DHCP est réalisée en utilisant des trames Ethernet à diffusion individuelle adressées uniquement à ladite adresse de commande d'accès au support.

3. Procédé selon la revendication 1, dans lequel ladite entité est le programme d'amorçage et dans lequel l'exécution de l'échange de clés comprend l'exécution d'un logiciel de mémoire en lecture seule pour activer une carte d'interface réseau (202) du dispositif informatique et communiquer avec le serveur, pendant le processus d'amorçage du dispositif informatique.

4. Supports tangibles non transitoires lisibles par ordinateur sur lesquels se trouvent des instructions qui, lorsqu'elles sont exécutées par un processeur, amènent le processeur à mettre en oeuvre un procédé comprenant :
selon les instructions du BIOS (104), l'exécution et le transfert d'une commande à une entité qui est soit un programme d'amorçage (410) soit un module de pilote de programme d'amorçage (502) dans un dispositif informatique,
l'obtention, par l'entité, d'une clé par l'intermédiaire d'un échange de clés avec un serveur (208), dans le cadre d'un processus d'amorçage d'un dispositif informatique ;
l'utilisation, par l'entité, de la clé pour déchiffrer un noyau de système d'exploitation chiffré (404) stocké dans un volume d'amorçage pour générer un noyau de système d'exploitation déchiffré, et
l'exécution et le transfert d'une commande audit noyau de système d'exploitation déchiffré,
**caractérisé en ce que** ledit échange de clés est un échange de clés Diffie Hellman réalisé en utilisant une négociation d'option PXE DHCP.

5. Support lisible par ordinateur selon la revendication 4, dans lequel ladite entité est le module de pilote de programme d'amorçage (502) qui est configuré pour activer une carte d'interface réseau (202) du dispositif informatique pour communiquer avec le serveur, dans lequel ledit serveur a une adresse de commande d'accès au support et dans lequel une négociation d'option PXE DHCP est réalisée à l'aide de trames Ethernet à diffusion individuelle adressées uniquement à ladite adresse de contrôle d'accès au support.
